# EUROPEAN PATENT SPECIFICATION

(11) **EP 3 505 930 B1**
(45) Date of publication and mention of the grant of the patent: **28.04.2021**
(21) Application number: 17846106.7
(22) Date of filing: 10.08.2017
(51) Int. Cl.: G01N 30/88, B01D 15/36, B01D 15/38, B01J 20/28, B01J 20/281, G01N 30/02, G01N 30/26, B01D 15/30, B01J 20/285

(54) **METHOD FOR ANALYZING AMINE COMPOUND**
VERFAHREN ZUR ANALYSE VON AMINVERBINDUNGEN
PROCÉDÉ D'ANALYSE DE COMPOSÉ AMINÉ

(30) Priority: 29.08.2016 JP 2016167038
(43) Date of publication of application: 03.07.2019
(73) Proprietor: Showa Denko K.K., Tokyo 105-8518 (JP)
(72) Inventor: KONDO Hideyuki, Tokyo 105-8518 (JP)
(74) Representative: Strehl Schübel-Hopf & Partner
(86) International application number: PCT/JP2017/029132
(87) International publication number: WO 2018/043098

(56) References cited:
- WO-A1-2016/129322
- JP-A- 2005 337 713
- JP-A- 2007 191 581
- JP-A- 2011 169 660
- JP-A- 2012 220 401
- US-A1- 2014 178 912
- US-A1- 2014 370 614
- US-A1- 2014 370 614

## Description

### TECHNICAL FIELD

The present invention relates to a method for analyzing an amine compound.

### BACKGROUND ART

Amine compounds are important compounds contained in various substances such as pharmaceuticals, foods, fertilizers, and industrial chemicals. Also, amine compounds are compounds to be analyzed in research and development, quality testing and the like in various industries. In an environmental field, amine compounds, which are contained in tap water and adversely affect the human body, are widely analyzed.

As a method for analyzing amine compounds, a method for analyzing amine compounds by liquid chromatography is generally used. As the method for analyzing amine compounds by liquid chromatography, for example, an analysis method in reverse phase chromatography (RP) mode using an ODS column is widely known (see, for example, Patent Document 1). The ODS column is an analysis column filled with a silica gel-based packing material such as an octadecyl-silica gel (ODS) subjected to end capping treatment for suppressing adsorption of amine compounds.

However, in the method for analyzing amine compounds in RP mode, amine compounds with a high hydrophilicity may not be sufficiently retained in the column in some cases. For example, in a RP method using an ODS column, amine compounds having high hydrophilicity are not retained in the column. Therefore, in order to sufficiently retain amine compounds in the column, it is sometimes necessary to add an ion pair reagent such as sodium 1-pentanesulfonate. However, adding the ion pair reagent in this way can significantly shorten a life of the column.

In addition, in recent years, an analysis method using a hydrophilic interaction chromatography (HILIC) separation mode using a column filled with a silica gel packing material into which a sulfobetaine group, which is an amphoteric ion group, is introduced is also generally known. However, the analysis method based on the HILIC separation mode has a problem that amine compounds having high hydrophilicity are not sufficiently retained in the column. Furthermore, in the analysis method based on the HILIC separation mode, the amine compounds which are a basic substance is adsorbed in the column due to the silanol group remaining in the silica gel packing material for RP or HILIC, which adversely affects the analysis result.

Patent Document 2 discloses an HPLC chromatography column comprising a liquid chromatography packing material, which is a polysiloxane polymer packing material comprising carboxyl groups. The packing material has further been treated to saturation with an aminated latex bound to the carboxyl groups by electrostatic force.

The liquid chromatography packing material is employed in a method of analyzing tris(hydroxymethyl)aminomethane using the said HPLC chromatography column and using acetonitrile as mobile phase.

[Patent Document 1] Japanese Patent Application Laid-Open No. H06-174708.
[Patent Document 2] United States Patent Application Publication No. 2014/0370614 A1

[Non-Patent Document 1] Kyoritsu Publishing, High-Performance Liquid Chromatography Method, 1986, p. 93.

### DISCLOSURE OF THE INVENTION

The present invention has been made in view of such circumstances, and it is an object of the present invention to provide a method for analyzing an amine compound using the liquid chromatography column.

The inventors of the present invention have made extensive studies in order to solve the above problems, and found that the following columns can be obtained, thus completing the present invention. That is, 1.50 mmol or more of carboxyl groups is introduced into a packing material per 1 g of the packing material, and a column filled with polymer particles having a surface pH and a hydrophilicity which are controlled based on the determined analysis method in the HILIC separation mode was used. By using the column in not only a HILIC separation mode but also a mixed mode combining RP and an ion exchange chromatography, a column that exhibits sufficient performance for separating and analyzing amine compounds can be obtained.

That is, the present invention relates to the following items.
[1] A method for analyzing an amine compound according to claim 1.
[2] The method for analyzing an amine compound according to [1], wherein the water-soluble organic solvent is at least one selected from the group consisting of acetonitrile, methyl alcohol, ethyl alcohol, isopropyl alcohol, acetone, methyl ethyl ketone and tetrahydrofuran.
[3] The method for analyzing an amine compound according to [3], wherein the water-soluble organic solvent is acetonitrile.

According to the present invention, it is possible to provide a method for analyzing an amine compound using the column.

### BRIEF DESCRIPTION OF THE DRAWINGS

FIG.1 is a chromatogram obtained by measuring the separation coefficient α1 (Tb/Tp) and the separation coefficient α2 (U/2dU) of the polymer packing material of Example 1.
FIG. 2 is a chromatogram of uracil and adrenaline in an evaluation of the liquid chromatography column of Example 1.

### DETAILED DESCRIPTION OF THE INVENTION

Hereinafter, embodiments of a liquid chromatography packing material according to the present disclosure will be described. Furthermore, embodiments of a liquid chromatography column packed with the liquid chromatography packing material according to the present disclosure and a method for analyzing an amine compound using the column, according to the present invention, will also be described.

It is to be noted that this embodiment will be described in detail to make the gist of the invention better understood, and it is not intended to limit the present invention unless otherwise specified.

### [Liquid Chromatography Packing Material]

The liquid chromatography packing material of the present disclosure is a polymer packing material having a carboxyl group. And 1.50 mmol or more of the carboxyl group is introduced into the polymer packing material per 1 g of the polymer packing material. In addition, an index indicating pH of the surface of the polymer packing material as determined by hydrophilic interaction chromatography (HILIC) is 1.30 or more; and an index indicating hydrophilicity of the surface of the polymer packing material as determined by a hydrophilic interaction chromatography (HILIC) is from 1.00 to 1.30.

### (Definition of Index Indicating pH and Index Indicating Hydrophilicity)

Here, the index indicating pH of the surface of the polymer packing material according to the present invention and the index indicating hydrophilicity of the surface of the polymer packing material will be explained.

The index indicating pH and the index indicating hydrophilicity on the surface of the polymer packing material are a performance evaluation index of the HILIC column proposed by Ikegami et al in 2011 and are based on technologies generally applicable in the world (Journal of Chromatography A, vol.1218, (2011), p. 5903-5919). By using a commercially available liquid chromatographic analyzer (for example, Nexera-i (trade name, manufactured by Shimadzu Corporation), Agilent 1260 Infinity (manufactured by Agilent Technologies Co., Ltd.) or the like, the indices can be obtained reproducibly regardless of the manufacturers and the models of the liquid chromatographic analyzer. These indices are measured in the HILIC separation mode. The liquid chromatography measurement condition in the HILIC separation mode is shown as below: an ultraviolet detector (UV, wavelength: 254 nm) is used as a detector; a column temperature is 30°C; and a mobile phase is a mixed liquid of an acetonitrile and a water solution in a ratio (acetonitrile/water solution) of 90/10 (volume before mixing) wherein the water solution contains 10 mmol/L acetic acid and 10 mmol/L ammonium acetate

The index indicating pH of the surface of the polymer packing material in the present disclosure and the index indicating hydrophilicity of the surface of the polymer packing material can be obtained by using a liquid chromatography column under the measurement condition as shown above, wherein the liquid chromatography column is prepared by filling the polymer packing material in a cylindrical liquid chromatography housing having an inner diameter of 2.0 mm, a length of 150 mm or an inner diameter of 4.6 mm and a length of 150 mm. Based on the above-mentioned literature by Ikegami et al., the linear flow velocity of the mobile phase at this time is 3.3 cm/min (When a housing having an inner diameter of 2.0 mm is used, a flow rate of the mobile phase is 0.11 mL/min. When a housing having an inner diameter of 4.6 mm is used, a flow rate of the mobile phase is fixed at 0.55 mL/min.).

As an index indicating pH of the surface of the packing material, which corresponds to an ionic interaction (ion exchange action) including an acid-base interaction, the index indicating pH is defined as a separation coefficient α1 (Tb/Tp). The separation coefficient α1 (Tb/Tp) is obtained by performing the liquid chromatography measurement of a theobromine (Tb) and theophylline (Tp) in HILIC separation mode. When the index indicating pH is 1.00 or more, the polymer packing material exhibits an anionic property and therefore exhibits a cation exchange action. On the other hand, when the index indicating pH is less than 1.00, the polymer packing material exhibits cationic character and therefore exhibits anion exchange action. Therefore, the larger the difference between the index indicating pH and the value of 1.00, the higher the ion-exchangeability can be exhibited in the polymer packing material.

As an index indicating a selectivity of the hydrophilic group depending on the thickness of the hydration phase on the surface of the packing material, the index indicating hydrophilicity is defined as a separation coefficient α2 (U/2dU). The separation coefficient α2 (U/2dU) obtained by performing the liquid chromatography measurement of a uridine (U) and a 2'-deoxyuridine (2dU) in HILIC separation mode. When the index indicating hydrophilicity is 1.00 or more, a hydrophilic interaction by the polymer packing material is developed.

Here, the separation coefficients α1 and α2 are the ratios of the retention factors k of each substance. In HILIC, each retention factor k is defined by k=(t-to)/to, in which t₀ is an elution time of toluene and, t is an elution time of each substance. That is, the separation coefficient α1 (Tb/Tp) is equal to k1/k2, α1(Tb/Tp) = k1/k2, in which k1 is the retention factor of theobromine, and k2 is the retention factor of theophylline. Also, the separation coefficient α2 (U/2dU) is equal to k3/k4, α2 (U/2dU) = k3/k4, in which k 3 is the retention factor of uridine, and k 4 is the retention factor of 2'-deoxyuridine.

In the HILIC separation mode, it is also presumed that an ion exchange action is developed by the carboxyl group introduced into the polymer packing material. And the HILIC separation mode is generally treated as a separation method that also includes an ion exchange action. Therefore, the present specification also uses the name of the HILIC separation mode for explanation.

### (Polymer Packing Material)

As the polymer packing material according to the present disclosure, a hydrophilic polymer having at least a carboxyl group introduced therein is used. In addition to the carboxyl group, a hydrophilic polymer into which a carboxyalkyl group, a sulfo group, a sulfoalkyl group or the like is introduced may be used.

As the polymer packing material into which a carboxyl group is introduced, a polymer packing material in which a carboxyl group is introduced by chemical modification or coating is preferable. As the polymer packing material into which a carboxyl group is introduced, a polyvinyl alcohol resin or a polyhydroxy (meth) acrylate resin is preferable.

The introduction amount of the carboxyl group in the polymer packing material can be controlled by the chemical modification amount or the coating amount with respect to the polymer packing material. The introduction amount of the carboxyl group in the liquid chromatography packing material of the present disclosure is 1.50 mmol or more per 1 g of the packing material, preferably 1.60 mmol or more, more preferably 1.80 mmol or more, to obtain sufficient analytical performance in the HILIC separation mode or the mixed mode combined with a reverse phase chromatography (RP) and an ion exchange chromatography. When the introduction amount of the carboxyl group in the polymer packing material is less than 1.50 mmol per 1 g of the packing material, the index indicating pH by performing the liquid chromatography measurement in the HILIC separation mode is less than 1.30 and a sufficient ion exchange action is not expressed. As a result, the amine compound may not be sufficiently retained in the column in some cases.

The index indicating pH of the surface of the polymer packing material is 1.30 or more, preferably 1.30 or more and 1.60 or less, more preferably 1.40 or more and 1.60 or less. When the index indicating pH is less than 1.30, the polymer packing material does not exhibit sufficient ion exchange action. Therefore, amine compounds may not be sufficiently held in the column and eluted in the HILIC separation mode or in a mixed mode combining RP and ion exchange chromatography. In addition, when the index indicating pH is 1.60 or less, the ion exchange action of the polymer packing material does not become too strong, and the amine compound is sufficiently held in the column.

The index indicating hydrophilicity of the surface of the polymer packing material is 1.00 or more and 1.30 or less, preferably 1.05 or more and 1.25 or less, more preferably 1.10 or more and 1.20 or less. When the index indicating hydrophilicity is less than 1.00, it indicates that an amine compound cannot be eluted based on the hydrophilic interaction between uridine and 2'-deoxyuridine, and the essence of the liquid chromatography packing material used for HILIC column is impaired. In addition, when the index indicating hydrophilicity exceeds 1.30, the hydrophilicity of the packing material is too high, and as a result, the mixed mode combining PR and ion exchange chromatography may not work.

The shape of the polymer packing material is preferably spherical with a volume average particle size of 1 µm to 30 µm, and more preferably spherical with a volume average particle diameter of 3 µm to 10 µm, from the viewpoint that the polymer packing material has a sufficient separation performance, high sensitivity, and strength that can withstand pressures of 1 MPa to 30 MPa.

The volume average particle diameter in the present disclosure is measured by the Coulter counter method as follows. In other words, a precision particle size distribution measurement device (trade name: Multisizer 4, manufactured by Beckman Coulter, Inc.) is used as a measuring device. 25 mL of isotone (diluted solution) is added to 0.2 g of polymer packing material. Ultrasonic wave is added for 3 minutes to disperse the mixture, and then the volume average particle size is measured by using about 1,000 samples. In order to control the volume average particle size of the polymer packing material within a preferred range, classification by wind classification, classification by sieving, classification using precipitation, or the like may be used.

Examples of the method for producing a polymer packing material into which a carboxyl group is introduced according to the present disclosure include a method described in JP-A-2007-191581. The method includes steps of coating a polyvinyl alcohol resin base material or a polyhydroxy (meth) acrylate resin base material with a carboxyl group-containing water-soluble polymer, then cross-linking the carboxyl group-containing water-soluble polymer, and as a result, introducing a carboxyl group into the base materials of the above-mentioned resins. Further, the introduction amount of the carboxyl group can be determined by titration.

According to the liquid chromatography packing material of the present disclosure, in which 1.50 mmol or more of the carboxyl group is introduced into the polymer packing material per 1 g of the polymer packing material; an index indicating pH of the surface of the polymer packing material as determined by HILIC is 1.30 or more; and an index indicating hydrophilicity of the surface of the polymer packing material as determined by HILIC is from 1.00 to 1.30, it becomes possible to more accurately and more easily analyze the amine compound.

### [Liquid Chromatography Column]

The liquid chromatography column of the present disclosure includes, for example, a housing for liquid chromatography having a cylindrical shape or the like (hereinafter abbreviated as "housing") and a packing material filled in the housing. In the liquid chromatography column of the present disclosure, the liquid chromatography packing material of the present disclosure is used as a packing material.

### (Housing)

The material and size of the housing are not particularly limited. As the housing, it is preferable to use a cylindrical housing made of stainless steel or polyetheretherketone (PEEK) resin, which is generally used as a housing for a liquid chromatography.

When the housing is cylindrical, in order to obtain a sufficient separation performance and a high detection sensitivity, its inner diameter is preferably 1.0 mm to 8.0 mm, more preferably 2.0 mm to 6.0 mm, still more preferably from 2.0 mm to 4.6 mm. If the inner diameter of the cylindrical housing is 1.0 mm or more, the liquid chromatography packing material can be easily and sufficiently filled in the housing. On the other hand, if the inner diameter of the cylindrical housing is 8.0 mm or less, a sufficient column performance can be obtained even at the time of high-speed analysis. Further, the column pressure does not become too high, and the range of the flow velocity of the measurable mobile phase can be widened.

The length of the housing is preferably from 35 mm to 300 mm, more preferably from 35 mm to 250 mm, and still more preferably from 50 mm to 250 mm. When the length of the housing is 35 mm or more, the amine compound can be sufficiently held in the column, and as a result, the amine compound can be separated. On the other hand, if the length of the housing is 300 mm or less, the column pressure does not become too high and the amine compound can be sufficiently eluted from the column.

According to the liquid chromatography column of the present disclosure, since the liquid chromatography packing material of the present disclosure is packed in the housing, analysis of an amine compound can be performed more accurately and more easily.

### [Method for Analyzing Amine Compound]

The method for analyzing an amine compound of the present invention is an analysis method using the liquid chromatography column of the present disclosure. The separation mode of the liquid chromatography column is a a mix mode combining a reverse phase chromatography and (RP) and an ion exchange chromatography. Here, examples of the amine compound include compounds having a structure in which some or all of the hydrogen atoms of ammonia are substituted with organic groups such as hydrocarbon groups.

### (Mobile Phase)

As the mobile phase in the method of analyzing the amine compound of the present invention, a mixed solvent of a water-soluble organic solvent and water is used.

Examples of the water-soluble organic solvent include an acetonitrile; an alcohol such as methyl alcohol, ethyl alcohol, and isopropyl alcohol; a ketone such as acetone and methyl ethyl ketone; and an ether such as tetrahydrofuran. Among these, preferably the water-soluble organic solvent is at least one solvent selected from the group consisting of acetonitrile, methyl alcohol, ethyl alcohol, isopropyl alcohol, acetone, methyl ethyl ketone and tetrahydrofuran. More preferably it is acetonitrile. In the method for analyzing an amine compound of the present invention, one of these water-soluble organic solvents may be used alone, or two or more of these may be used in combination.

### (Separation Mode)

In the method of analyzing the amine compound of the present invention, the separation mode by the liquid chromatography column is a mixed mode combining RP and ion exchange chromatography. Therefore, by adjusting a composition ratio of the water-soluble organic solvent and water in the mixed solvent which is a mobile phase, the mixed mode can be developed selectively.

The mobile phase can be appropriately selected according to the type of the sample to be analyzed (amine compound). Usually, the range of composition ratio (volume ratio before mixing) of the water-soluble organic solvent in the mixed solvent is from 50% to 70%. When the composition ratio (volume ratio before mixing) of the water-soluble organic solvent is lower than 50%, a mixed mode combining RP and ion exchange chromatography is developed. On the other hand, when the composition ratio (volume ratio before mixing) of the water-soluble organic solvent is higher than 70%, a HILIC separation mode, not according to the invention, is developed. That is, depending on the type of the amine compound to be analyzed, a separation mode to be expressed can be determined. And in accordance with the separation mode, a composition ratio (volume ratio before mixing) of the water-soluble organic solvent in the mixed solvent can be determined.

In the mixed solvent, the composition ratio (volume ratio before mixing) of the water-soluble organic solvent and water (water-soluble organic solvent : water) is preferably from 1:99 to 99:1, and more preferably from 5:95 to 95:5.

In the HILIC separation mode, the composition ratio (volume ratio before mixing) of water-soluble organic solvent and water in the mixed solvent (water-soluble organic solvent: water) is usually preferably from 50:50 to 99:1, more preferably from 60:40 to 99:1, still more preferably from 70:30 to 95:5, and particularly preferably from 75:25 to 95: 5.

In the mixed mode in which RP and ion exchange chromatography are combined, the composition ratio (volume ratio before mixing) of water-soluble organic solvent and water in the mixed solvent (water-soluble organic solvent: water) is, according to the invention, from 1:99 to 70:30, more preferably from 1:99 to 50:50, still more preferably from 5:95 to 50:50, and particularly preferably from 10:90 to 50:50.

In addition, in the method for analyzing amine compounds of the present invention, for the purpose of adjusting the hydrophilicity level and the retention time of the sample, the mobile phase may contain an acid such as formic acid, acetic acid, nitric acid or the like; or a salt such as ammonium formate, ammonium acetate or the like.

In the method for analyzing an amine compound of the present invention, the column flow velocity during the analysis is not particularly limited. The column flow rate, which is a linear flow rate of the mobile phase containing the amine compound flowing in the liquid chromatography column of the present invention at the time of analysis of the amine compound, is preferably from 1.5 cm/min to 15.0 cm/min (for example, when the inner diameter of the housing is 2.0 mm, the flow rate is from 0.05 mL/min to 0.50 mL/min), more preferably from 3.0 cm/min to 9.0 cm/min (for example, when the inner diameter of the housing is 2.0 mm, the flow rate is from 0.10 mL/min to 0.30 mL/min).

According to the method for analyzing an amine compound of the present invention, the liquid chromatography column of the present disclosure is used; and the separation mode by the liquid chromatography column is a mixed mode combining RP and ion exchange chromatography. Therefore, according to a type of the amine compound, it is possible to more accurately and more easily analyze an amine compound by appropriately selecting the mix mode.

As shown in the examples described later, by introducing 1.50 mmol or more carboxyl group per 1 g of the packing material to the packing material, the cation exchange action works sufficiently and a mixed mode of RP mode and ion exchange chromatography is developed. Therefore, it is possible to sufficiently retain an amine compound which is difficult to be retained in the RP mode alone. At this time, for example, the retention factor of adrenaline when uracil is used as the RP indicator substance is preferably 2.0 or more, more preferably 2.5 or more. When this is accomplished, it can be considered that the mix mode combining reversed phase chromatography (RP) and ion exchange chromatography has worked.

The method for analyzing an amine compound of the present invention can be separated and analyze one or more amine compounds. In particular, according to the above-described mix mode, it is possible to simultaneously measure by one analysis an aromatic compound which is easily retained in the RP mode and an ionic substance such as an amine compound which is not retained alone in the RP mode due to too strong hydrophilicity.

### EXAMPLES

Hereinafter, the present invention will be explained in more detail with reference to examples and comparative examples, however, the present invention is not limited to the following examples.

### (Validity Evaluation of Index Indicating pH and Index Indicating Hydrophilicity)

With respect to the index indicating pH and the index indicating hydrophilicity by HILIC, according to the above non-patent document (Journal of Chromatography A, 1218, 2011, 5903-5919), validity of the literature data was confirmed.

As the column, ZIC (registered trademark) HILIC (inner diameter 2.0 mm, length 150 mm, manufactured by Merck Co., Ltd.) described in the above non-patent document was used. The index indicating pH described in the above non-patent document is 1.20, and the index indicating hydrophilicity is 2.03.

As a liquid chromatography analyzer, Nexera-i (trade name, manufactured by Shimadzu Corporation) was used. According to the non-patent document mentioned above, the measurement condition was shown as below: using an ultraviolet detector (UV, wavelength: 254 nm) as a detector; a column temperature was 30°C; a mobile phase composition was a mixed liquid of an acetonitrile and a water solution in a ratio (acetonitrile/water solution) of 90/10 (volume before mixing) wherein the water solution contains 10 mmol/L acetic acid and 10 mmol/L ammonium acetate. Further, a flow rate of the mobile phase was set to 0.11 mL / min (linear flow rate: 3.3 cm / min), and 1 µL samples of toluene 1000 µg/mL, theophylline 100 µg/mL, theobromine 100 µg/mL, uridine 100 µg/mL, or 2-deoxyuridine 100 µg/mL (dissolved in the mobile phase) were sequentially injected to confirm the elution time, and then an index indicating pH and an index indicating hydrophilicity were calculated.

As a result, it was confirmed that the index indicating pH is 1.24 and the index indicating hydrophilicity is 1.99, and it is possible to reproduce the value described in the above-mentioned non-patent document.

In the following Examples and Comparative Examples, an index indicating pH and an index indicating hydrophilicity were determined according to the present apparatus and the measurement condition. However, since the column having the inner diameter of 4.6 mm was used in Comparative Example 2, the flow rate of the mobile phase was 0.55 mL/min (linear flow rate: 3.3 cm/min), and the injection amount of each test sample was 4 µL.

### [EXAMPLE 1]

### (Preparation of Gel and Column)

A packing material was prepared according to the method described in JP 2007-191581, by introducing 2.09 mmol of carboxyl group to the polyvinyl alcohol resin base material (particle size 5.0 µm) per 1 g of the base material. The polymer packing material of Example 1 (a polymer packing material into which a carboxyl group was introduced) was prepared.

The amount of carboxyl groups introduced into the polyvinyl alcohol resin base material was determined by titration.

After 0.35 g of the polymer packing material was added to 1.2 ml of a 0.5 mol/L formic acid aqueous solution, it was subjected to a dispersion treatment in an ultrasonic bath, and a slurry solution in which the carboxyl group-introduced packing material was uniformly dispersed in an aqueous formic acid solution.

Using the obtained slurry solution, the above-mentioned polymer packing material was filled into a cylindrical housing made from PEEK (manufactured by Tomoe Seisakusho Co., Ltd.) having an inner diameter of 2.0 mm and a length of 150 mm.

That is, by feeding the slurry solution into the housing and passing water from the inlet side toward the outlet side of the housing, the slurry solution was pressurized at 29 MPa (constant pressure) for 20 minutes to pressurize the slurry solution. And then, a packed bed including a polymer packing material was formed, and the liquid chromatography column of Example 1 was obtained.

According to the method described above, the index indicating pH and the index indicating hydrophilicity of the packing material of Example 1 were determined. As a result, the index indicating pH (a separation coefficient of the theobromine and theophylline α1 (Tb/Tp)) was 1. 44, the index indicating hydrophilicity (a separation coefficient of uridine and 2'-deoxyuridine α2 (U/2dU)) was 1.09. Since uridine was eluted after 2'-deoxyuridine, it was confirmed that the obtained packing material has a performance of a packing material used for HILIC.

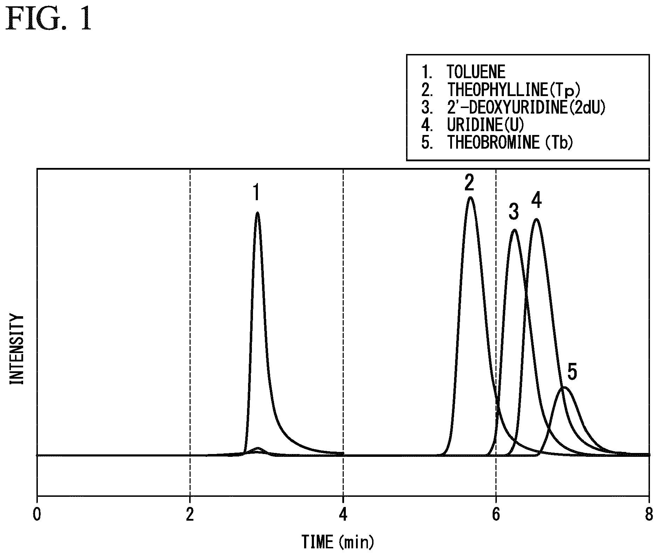

The chromatograms of the separation coefficient α1 (Tb/Tp) and the separation coefficient α2 (U/2dU) of the polymer packing material of Example 1 were shown in FIG.1. In FIG. 1, Reference Numeral 1 denotes the peak of toluene, Reference Numeral 2 denotes the peak of theophylline (Tp), Reference Numeral 3 denotes the peak of 2'-deoxyuridine (2dU), Reference Numeral 4 denotes the peak of uridine (U), and Reference Numeral 5 denotes the peak of theobromine (Tb).

### (Evaluation of Column)

The liquid chromatography column of Example 1 was evaluated by using Nexera-i (trade name, manufactured by Shimadzu Corporation) as a liquid chromatograph analyzer, and using a ultraviolet detector (UV, wavelength: 275 nm) as a detector.

As a mobile phase, a mixed solution prepared by mixing acetonitrile with a 50 mmol/L formic acid aqueous solution in the manner that the ratio of the acetonitrile and 50 mmol/L formic acid aqueous solution was equal to 20: 80 (volume ratio before mixing), that is acetonitrile : 50 mmol/L formic acid aqueous solution=20: 80 (volume ratio before mixing), was used.

Under a condition that a column temperature was 40°C and a mobile phase flow rate in the column was 0.2 mL/min (linear flow rate: 6.0 cm /min), uracil and adrenaline were separated and analyzed by injecting 2 µL of a mixed sample containing 50 µg/mL of uracil (t₀ indicator substance in RP mode) and 1000 µg/mL of adrenaline as an amine compound.

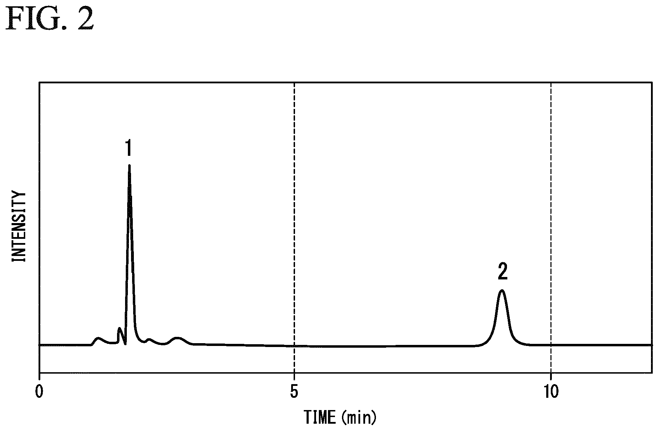

The evaluation results of the column are shown in Table 1, and the chromatogram in the evaluation of the column of Example 1 was shown in FIG.2. In FIG. 2, Reference Numeral 1 denotes the peak of uracil, and Reference Numeral 2 denotes the peak of adrenaline.

From the results in Table 1, the elution time of adrenaline was 9.06 minutes, the retention factor of adrenaline (which was defined as k = (t elution time of adrenaline - t₀ elution time of indicator substance) / to elution time of indicator substance) was 4.10. It was confirmed that the liquid chromatography column of Example 1 had sufficient performance as a mixed mode combining RP and ion exchange chromatography.

### [EXAMPLE 2]

### (Preparation of Gel and Column)

A polymer packing material of Example 2 (a polymer packing material into which a carboxyl group was introduced) was prepared by using the same polyvinyl alcohol resin base material as in Example 1 and introducing 1.76mmol of a carboxyl group into the base material per 1g the base material in the same manner as in Example 1.

The packing material was filled in the same housing as in Example 1 in the same manner as in Example 1 to obtain a liquid chromatography column of Example 2.

According to the above method, the index indicating pH and the index indicating hydrophilicity of the polymer packing material of Example 2 were determined, and as a result, the index indicating pH was 1.37 and the index indicating hydrophilicity was 1.19. It was confirmed that the packing material had performance as a packing material for HILIC.

### (Column Evaluation)

Using the same apparatus as in Example 1, and the same measurement condition as in Example 1, uracil and adrenaline were separated and analyzed by injecting 2µL of a mixed sample containing 50 µg/mL of uracil and 1000 µg/mL of adrenaline.

The evaluation results of the column were shown in Table 1.

From the results in Table 1, the elution time of adrenaline was 6.56 minutes, the retention factor of adrenaline was 2.63. Although the retention factor of adrenaline decreased as compared with Example 1, it was confirmed that it also had performance as a mixed mode combining RP and ion exchange chromatography.

### [Example 3]

### (Preparation of Gel and Column)

A polymer packing material of Example 3 (a polymer packing material into which a carboxyl group was introduced) was prepared by using the same polyvinyl alcohol resin base material as in Example 1 and introducing 1.62mmol of a carboxyl group into the base material per 1g of the base material in the same manner as in Example 1.

The packing material was filled in the same housing as in Example 1 by the same method as in Example 1 to obtain the liquid chromatography column of Example 3.

According to the method described above, the index indicating pH and the index indicating hydrophilicity of the polymer packing material of Example 3 were determined.

As a result, the index indicating pH was 1.33 and the index indicating hydrophilicity was 1.19. It was confirmed that it had performance as a packing material for HILIC.

### (Column Evaluation)

Using the same apparatus as in Example 1 and under the same measurement conditions as in Example 1, uracil and adrenaline were separated and analyzed by injecting 2µL of a mixed sample containing 50 µg/mL of uracil and 1000 µg/mL of adrenaline.

The evaluation results of the column were shown in Table 1.

From the results of Table 1, the elution time of adrenaline was 6.44 minutes, and the retention factor of adrenaline was 2.57. Although the retention of adrenaline was decreased as compared with Example 1, it was confirmed that it also had performance as a mixed mode combining RP and ion exchange chromatography.

### [Comparative Example 1]

### (Preparation of Gel and Column)

A polymer packing material of Comparative Example 1 (a polymer packing material into which a carboxyl group was introduced) was prepared by using the same polyvinyl alcohol resin base material as in Example 1, and introducing 1.38mmol of a carboxyl group into the base material per 1g of the base material in the same manner as in Example 1.

The packing material was filled in the same housing as in Example 1 by the same method as in Example 1 to obtain a liquid chromatography column of Comparative Example 1.

According to the above method, the index indicating pH and the index indicating hydrophilicity of the polymer packing material of Comparative Example 1 were determined. As a result, the index indicating pH was 1.22 and the index indicating hydrophilicity was 1.36. It was confirmed that the packing material had performance as a packing material for HILIC.

### (Column Evaluation)

Using the same apparatus as in Example 1, and the same measurement conditions as in Example 1, uracil and adrenaline were separated and analyzed by injecting 2µL of a mixed sample containing 50 µg/mL of uracil and 1000 µg/mL of adrenaline.

The evaluation results of the column were shown in Table 1.

From the results in Table 1, adrenaline and uracil eluted without being separated. It may be due to a fact that since the index indicating pH was low, it did not exhibit performance as a mixed mode sufficiently combining RP and ion exchange chromatography because the ion exchange action did not be developed in particular.

### [Comparative Example 2]

As a commercially available column, a HILIC column filled with a diol group introduction type packing material in which no carboxyl group was introduced (trade name: HILIC-1, an inner diameter of 4.6 mm, a length 150 mm, manufactured by Thermo Fisher Scientific Co., Ltd.) was used.

According to the above method, the index indicating pH and the index indicating hydrophilicity of the diol group introduction type packing material of Comparative Example 2 were determined. As a result, the index indicating pH was 1.00 and the index indicating hydrophilicity was 0.89. It was confirmed that although it was a column for HILIC, the index indicating hydrophilicity was lower than 1.00.

### (Column Evaluation)

Using the same apparatus as in Example 1, in the same manner as in Example 1 except that a flow rate of mobile phase was 1.0 mL / min (linear flow rate: 6.0 cm / min) in the column, uracil and adrenaline were separated and analyzed by injecting 10 µL of a mixed sample containing 50 µg/mL of uracil and 1000 µg/mL of adrenaline.

The evaluation results of the column were shown in Table 1.

From the results in Table 1, adrenaline eluted prior to uracil. It may be due to a fact that since the index indicating pH was low, it did not exhibit the performance as a mixed mode sufficiently combining RP and ion exchange chromatography because the ion exchange action did not be developed in particular.

### [Comparative Example 3]

As a commercially available column, a HILIC column filled with a amide group introduction type packing material in which no carboxyl group was introduced (trade name: Amide-80, inner diameter 2.0 mm, length 150mm, manufactured by Tosoh Corporation) was used.

According to the above method, the index indicating pH and the index indicating hydrophilicity of the amide group introduction type packing material of Comparative Example 3 were determined. As a result, the index indicating pH was 1.31, and the index indicating hydrophilicity was 1.65. It was confirmed that it had a performance as a packing material for HILIC.

### (Evaluation of Column)

Using the same apparatus as in Example 1 and under the same measurement conditions as in Example 1, uracil and adrenaline were separated and analyzed by injecting 2 µL of a mixed sample containing 50 µg/mL of uracil and 1000 µg/mL of adrenaline.

The evaluation results of the column are shown in Table 1.

From the results in Table 1, the elution time of adrenaline was 3.34 minutes, and the retention factor of adrenaline was 0.67. Although adrenaline was slightly retained, the adrenaline retention force decreased significantly as compared with Example 1. In addition, due to the high index of hydrophilicity, it did not have a performance as a mixed mode sufficiently combining RP and ion exchange chromatography because RP action did not be developed in particular.

### [Comparative Example 4]

As a commercially available column, ZIC (R) HILIC (internal diameter 2.0 mm, length 150 mm, Merck Co.) was used for evaluation to validity of the index indicating pH and the index indicating hydrophilicity.

As described above, the index indicating pH was 1.24 and the index indicating hydrophilicity was 1.99. It was confirmed that it had a performance as a packing material for HILIC.

### (Column Evaluation)

Using the same apparatus as in Example 1, and under the same measurement condition as in Example 1, uracil and adrenaline were separated and analyzed by injecting 2µL of a mixed sample containing 50 µg/mL of uracil and 1000 µg/mL of adrenaline.

The evaluation results of the column are shown in Table 1.

From the results in Table 1, the elution time of adrenaline was 2.94 minutes, and the retention factor of adrenaline was 0.38. Although adrenaline was held slightly, the retention force of adrenaline decreased dramatically as compared with Example 1. In addition, since the index indicating pH was low and the index indicating hydrophilicity was high, it did not have a performance as a mixed mode sufficiently combining RP and ion exchange chromatography.

**[Table 1]**

| | Amount of carboxyl group per 1 g of packing material (mmol) | Index indicating pH α1 (Tb/Tp) | Index indicating hydrophili city α2 (U/2dU) | Elution time of uracil (min) | Elution time of adrenali ne (min) | Retention factor of adrenaline |
|---|---|---|---|---|---|---|
| Example 1 | 2.09 | 1.44 | 1.09 | 1.77 | 9.06 | 4.10 |
| Example 2 | 1.76 | 1.37 | 1.19 | 1.81 | 6.56 | 2.63 |
| Example 3 | 1.62 | 1.33 | 1.19 | 1.80 | 6.44 | 2.57 |
| Comp. Example 1 | 1.38 | 1.22 | 1.36 | 2.28 | 2.28 | Fail to be separated |
| Comp. Example 2 | - | 1.00 | 0.89 | 1.93 | 1.58 | Elution reversed |
| Comp. Example 3 | - | 1.31 | 1.65 | 1.99 | 3.34 | 0.67 |
| Comp. Example 4 | - | 1.24 | 1.99 | 2.13 | 2.94 | 0.38 |

### INDUSTRIAL APPLICABILITY

The present disclosure relates to a liquid chromatography packing material for analyzing an amine compound, which is composed of a polymer packing material in which a carboxyl group was introduced into the polymer packing material. The present disclosure relates to a liquid chromatography column and the present invention relates to a method of analyzing an amine compound using the liquid chromatography column. The packing material is capable of satisfactorily retaining and separating various amine compounds by HILIC separation mode or a mixed mode combining RP and ion exchange chromatography. Therefore, the present invention is useful when an amine compound is analyzed in research and development, quality testing, environmental analysis or the like in various industries, and the amine compound is an important compound contained in various substances such as pharmaceuticals, foods, fertilizers, or industrial chemicals.

## Claims

1. A method for analyzing an amine compound, comprising
analyzing an amine compound in a separation mode using a liquid chromatography column by using a mobile phase using a mixed solvent of a water-soluble organic solvent and water,
wherein
the separation mode is a mixed mode combining a reverse phase chromatography (RP) and an ion exchange chromatography;
the composition ratio (S:W) of water-soluble organic solvent (S) to water (W) in the mobile phase is from 1:99 to 70:30 by volume, this volume ratio being understood as the volume ratio before mixing of water-soluble organic solvent and water;
the liquid chromatography column comprises a liquid chromatography packing material, and a liquid chromatography housing in which the liquid chromatography packing material is filled;
the liquid chromatography packing material is a polymer packing material comprising a carboxyl group;the polymeric packing material comprises a polyvinyl alcohol resin in which a carboxyl group is introduced or a polyhydroxy (meth)acrylate resin in which a carboxyl group is introduced;
1.50 mmol or more of the carboxyl group is introduced into the polymer packing material per 1 g of the polymer packing material;
an index indicating pH of the surface of the polymer packing material as determined by hydrophilic interaction chromatography (HILIC) is 1.30 or more; and
an index indicating hydrophilicity of the surface of the polymer packing material as determined by a hydrophilic interaction chromatography (HILIC) is from 1.00 to 1.30,
wherein the index indicating pH of the surface of the polymer packing material is a separation coefficient of α1 (Tb/Tp), when performing a liquid chromatography measurement of a theobromine (Tb) and a theophylline (Tp) in a HILIC separation mode condition;
the index indicating hydrophilicity of the surface of the polymer packing material is defined by a separation coefficient of α2 (U/2dU), when performing a liquid chromatography measurement of a uridine (U) and a 2'-deoxyuridine (2dU) in a HILIC separation mode condition;
each separation coefficient of α1 and α2 is a ratio of retention factors k of the materials; each retention factor k is defined by k=(t-t₀)/t₀, wherein t₀ is an elution time of toluene and, t is an elution time of each substance; and
a condition of the liquid chromatography measurement in the HILIC separation mode is shown as below:
a column temperature is 30°C; and
a mobile phase is a mixed liquid of an acetonitrile and a water solution in a ratio (acetonitrile/water solution) of 90/10 by volume wherein the water solution contains 10 mmol/L acetic acid and 10 mmol/L ammonium acetate, this volume ratio being understood as the volume ratio before mixing acetonitrile and water.

2. The method for analyzing an amine compound according to claim 1,
wherein the water-soluble organic solvent is at least one selected from the group consisting of acetonitrile, methyl alcohol, ethyl alcohol, isopropyl alcohol, acetone, methyl ethyl ketone and tetrahydrofuran.

3. The method for analyzing an amine compound according to claim 1,
wherein the water-soluble organic solvent is acetonitrile.

## Patentansprüche

1. Verfahren zum Analysieren einer Aminverbindung, umfassend
das Analysieren einer Aminverbindung in einem Trennmodus unter Verwendung einer Flüssigchromatographiesäule durch Verwendung einer mobilen Phase unter Verwendung eines gemischten Lösungsmittels aus einem wasserlöslichen organischen Lösungsmittel und Wasser,
wobei
der Trennmodus ein gemischter Modus ist, der eine Umkehrphasenchromatographie (RP) und eine lonenaustauschchromatographie kombiniert;
das Zusammensetzungsverhältnis (S:W) von wasserlöslichem organischen Lösungsmittel (S) zu Wasser (W) in der mobilen Phase von 1:99 bis 70:30 nach Volumen beträgt, wobei dieses Volumenverhältnis als das Volumenverhältnis vor dem Mischen des wasserlöslichen organischen Lösungsmittels und Wasser zu verstehen ist;
die Flüssigchromatographiesäule ein Flüssigchromatographie-Packungsmaterial und ein Flüssigchromatographie-Gehäuse umfasst, in das das Flüssigchromatographie-Packungsmaterial gefüllt ist;
das Flüssigchromatographie-Packungsmaterial ein polymeres Packungsmaterial ist, das eine Carboxylgruppe umfasst; das polymere Packungsmaterial ein Polyvinylalkoholharz, in das eine Carboxylgruppe eingeführt ist, oder ein Polyhydroxy(meth)acrylatharz, in das eine Carboxylgruppe eingeführt ist, umfasst;
1,50 mmol oder mehr der Carboxylgruppe in das Polymerpackungsmaterial pro 1 g des Polymerpackungsmaterials eingebracht wird;
ein Index, der den durch hydrophile Wechselwirkungschromatographie (HILIC) bestimmten pH-Wert der Oberfläche des Polymerpackungsmaterials angibt, 1,30 oder mehr beträgt; und
ein Index, der die durch eine hydrophile Wechselwirkungschromatographie (HILIC) bestimmte Hydrophilie der Oberfläche des Polymerpackungsmaterials anzeigt, 1,00 bis 1,30 beträgt,
wobei der Index, der den pH-Wert der Oberfläche des Polymerpackungsmaterials anzeigt, ein Trennkoeffizient α1 (Tb/Tp) ist, wenn eine Flüssigchromatographie-Messung eines Theobromins (Tb) und eines Theophyllins (Tp) unter einer HILIC-Trennmodusbedingung durchgeführt wird;
der Index, der die Hydrophilie der Oberfläche des Polymerpackungsmaterials anzeigt, durch einen Trennkoeffizienten α2 (U/2dU) definiert ist, wenn eine Flüssigchromatographie-Messung eines Uridins (U) und eines 2'-Desoxyuridins (2dU) unter einer HILIC-Trennungsmodusbedingung durchgeführt wird;
jeder Trennkoeffizient α1 und α2 ein Verhältnis der Retentionsfaktoren k der Materialien ist;
jeder Retentionsfaktor k definiert durch k=(t-t₀)/t₀ ist, wobei t₀ eine Elutionszeit von Toluol ist und t eine Elutionszeit jeder Substanz ist; und
die Bedingung der Flüssigchromatographie-Messung im HILIC-Trennungsmodus folgendermaßen ist:
die Säulentemperatur ist 30°C; und
die mobile Phase ist eine gemischte Flüssigkeit aus einem Acetonitril und einer Wasserlösung in einem Verhältnis (Acetonitril/Wasserlösung) von 90/10, wobei die Wasserlösung 10 mmol/L Essigsäure und 10 mmol/L Ammoniumacetat enthält, wobei dieses Volumenverhältnis als das Volumenverhältnis vor dem Mischen von Acetonitril und Wasser zu verstehen ist.

2. Verfahren zum Analysieren einer Aminverbindung nach Anspruch 1,
wobei das wasserlösliche organische Lösungsmittel mindestens eines ist, das aus der aus Acetonitril, Methylalkohol, Ethylalkohol, Isopropylalkohol, Aceton, Methylethylketon und Tetrahydrofuran bestehenden Gruppe ausgewählt ist.

3. Verfahren zur Analyse einer Aminverbindung nach Anspruch 1, wobei das wasserlösliche organische Lösungsmittel Acetonitril ist.

## Revendications

1. Procédé d'analyse d'un composé aminé, comprenant l'analyse d'un composé aminé dans un mode de séparation utilisant une colonne de chromatographie en phase liquide en utilisant une phase mobile utilisant un solvant mixte d'un solvant organique soluble dans l'eau et d'eau,
dans lequel
le mode de séparation est un mode mixte combinant une chromatographie en phase inverse (PI) et une chromatographie par échanges d'ions ;
le rapport de composition (S:E) du solvant organique soluble dans l'eau (S) à l'eau (E) dans la phase mobile est de 1:99 à 70:30 en volume, ce rapport en volume étant entendu comme étant le rapport en volume avant mélange du solvant organique soluble dans l'eau et de l'eau ;
la colonne de chromatographie en phase liquide comprend une charge pour chromatographie en phase liquide, et un boîtier de chromatographie en phase liquide dans lequel la charge pour chromatographie en phase liquide est chargée ;
la charge pour chromatographie en phase liquide est une charge polymère comprenant un groupe carboxyle ; la charge polymère comprend une résine d'alcool polyvinylique dans laquelle un groupe carboxyle est introduit ou une résine de polyhydroxy (méth)acrylate dans laquelle un groupe carboxyle est introduit ;
1,50 mmol ou plus du groupe carboxyle est introduit dans la charge polymère pour 1 g de la charge polymère ;
un indice indiquant le pH de la surface de la charge polymère tel que déterminé par chromatographie d'interaction hydrophile (HILIC) est de 1,30 ou plus ; et
un indice indiquant l'hydrophilie de la surface de la charge polymère tel que déterminé par une chromatographie d'interaction hydrophile (HILIC) est de 1,00 à 1,30,
dans lequel l'indice indiquant le pH de la surface de la charge polymère est un coefficient de séparation de α1 (Tb/Tp), lors de la réalisation d'une mesure par chromatographie en phase liquide d'une théobromine (Tb) et d'une théophylline (Tp) dans une condition de mode de séparation HILIC ;
l'indice indiquant l'hydrophilie de la surface de la charge polymère est défini par un coefficient de séparation de α2 (U/2dU), lors de la réalisation d'une mesure par chromatographie en phase liquide d'une uridine (U) et d'une 2'-désoxyuridine (2dU) dans une condition de mode de séparation HILIC ;
chaque coefficient de séparation de α1 et α2 est un rapport de facteurs de rétention k des matériaux ;
chaque facteur de rétention k est défini par k = (t-t₀)/t₀, dans lequel t₀ est un temps d'élution du toluène et t est un temps d'élution de chaque substance ; et
une condition de la mesure par chromatographie en phase liquide dans le mode de séparation HILIC est montrée comme ci-dessous :
une température de colonne est de 30 °C ; et
une phase mobile est un liquide mixte d'un acétonitrile et d'une solution aqueuse en un rapport (acétonitrile/solution aqueuse) de 90/10 en volume dans lequel la solution aqueuse contient 10 mmol/l d'acide acétique et 10 mmol/l d'acétate d'ammonium, ce rapport en volume étant entendu comme étant le rapport en volume avant mélange de l'acétonitrile et de l'eau.

2. Procédé d'analyse d'un composé aminé selon la revendication 1,
dans lequel le solvant organique soluble dans l'eau est au moins un choisi dans le groupe constitué de l'acétonitrile, de l'alcool méthylique, de l'alcool éthylique, de l'alcool isopropylique, de l'acétone, de la méthyl éthyl cétone et du tétrahydrofuranne.

3. Procédé d'analyse d'un composé aminé selon la revendication 1,
dans lequel le solvant organique soluble dans l'eau est de l'acétonitrile.
